# EUROPÄISCHE PATENTSCHRIFT

(11) **EP 1 252 464 B1**
(45) Veröffentlichungstag und Bekanntmachung des Hinweises auf die Patenterteilung: **03.03.2004**
(21) Anmeldenummer: 00987434.8
(22) Anmeldetag: 21.12.2000
(51) Int. Cl.: F17C 5/02, F16L 39/00, F16L 59/18, F16L 59/06, B60S 5/02

(54) **EIN- ODER MEHRFLUTIGE KUPPLUNG FÜR VAKUUMISOLIERTE ROHR- ODER SCHLAUCHLEITUNGEN**
SINGLE FLOW OR MULTIPLE FLOW COUPLING FOR VACUUM-INSULATED CONDUITS OF HOSE PIPES
RACCORD MONOFLUX OU MULTIFLUX POUR TUYAUX RIGIDES OU FLEXIBLES ISOLES PAR VIDE

(30) Priorität: 14.01.2000 DE 10001207
(43) Veröffentlichungstag der Anmeldung: 30.10.2002
(73) Patentinhaber: Linde AG, 65189 Wiesbaden (DE)
(72) Erfinder: SILLAT, Diethard, 82152 Martinsried (DE); SIEPMANN, Hans-Albert, 45527 Hattingen/Ruhr (DE)
(74) Vertreter: Zahn, Christoph
(86) Internationale Anmeldenummer: PCT/EP2000/013117
(87) Internationale Veröffentlichungsnummer: WO 2001/051845

(56) Entgegenhaltungen:
- EP-A- 0 039 977
- DE-A- 4 104 711
- DE-C- 19 516 029
- GB-A- 802 917
- US-A- 5 429 155
- US-A- 5 829 791

## Beschreibung

Die Erfindung betrifft eine Kupplung für vakuumisolierte Rohr- oder Schlauchleitungen, die zur Führung eines oder mehrerer kryogener Medien vorgesehen sind, bestehend aus einem ein- oder mehradrigen Kupplungsstecker, dem bzw. von dem mittels einer ein- oder mehradrigen Zuführleitung oder dem bzw. von dem mittels mehrerer Zuführleitungen das oder die kryogenen Medien zugeführt bzw. abgezogen werden, und einer Kupplungsdose, wobei im zusammengekuppelten Zustand ein Leitungsrohr des Kupplungssteckers, das in axialer Richtung beweglich zum Kupplungsstecker ausgebildet ist, sich über die Trennebene hinaus in die Kupplungsdose hinein erstreckt.

Die Erfindung betrifft femer die Verwendung einer derartigen Kupplung.

Im folgenden werden bei den Bezeichnungen spezieller kryogener Medien entsprechend ihrem Aggregatzustand die Buchstaben "G" für "gasförmig" und "L" für "flüssig" bzw. "liquid" vorangestellt; also z. B. GH₂ bzw. LH₂ für gasförmigen bzw. flüssigen Wasserstoff. Des weiteren werden die Begriffe "CNG" und "LNG" für komprimiertes bzw. verflüssigtes Erdgas verwendet.

Insbesondere Wasserstoff und Erdgas gewinnen gegenwärtig durch den steigenden Energiebedarf und das gestiegene Umweltbewußtsein als Energieträger zunehmend an Bedeutung. So werden bereits Lastkraftwagen, Busse sowie Personenkraftwagen mittels mit Erdgas- oder Wasserstoff-betriebenen Motoren angetrieben. Darüber hinaus sind erste Versuche im Gange, Flugzeuge mit den genannten Medien anzutreiben.

Die Speicherung des Wasserstoffs oder Erdgases "an Bord" der oben genannten Verkehrsmittel ist dabei in flüssiger Form am sinnvollsten. Zwar müssen der Wasserstoff und LNG dazu auf etwa 25 K bzw. 112 K abgekühlt und auf dieser Temperatur gehalten werden - was nur durch entsprechende Isoliermaßnahmen an den Speicherbehältem bzw. -tanks realisiert werden kann -, doch ist eine Speicherung in gasförmigem Zustand aufgrund der geringen Dichte von GH₂ und CNG in der Regel in den obengenannten Verkehrsmitteln ungünstiger, da die Speicherung hierbei in großvolumigen und schweren Speicherbehältem bei hohen Drücken erfolgen muß.

Für die Betankung von Kraftfahrzeugen sind eine Vielzahl von konstruktiv unterschiedlichen Betankungskupplungen bekannt. Aus der DE-PS 41 04 711 ist eine sog. kaltziehbare Kupplung für vakuumisolierte Rohr- oder Schlauchleitungen, bestehend aus einem Kupplungsstecker und einer Kupplungsdose, bekannt. Bei einer derartigen Konstruktion ist ein Verbinden und Lösen von Kupplungsstecker und Kupplungsdose möglich, ohne daß diese vorher abgekühlt bzw. angewärmt werden müssen.

Mittels einer derartigen Kupplung konnte die Dauer des Betankungsvorganges eines Pkws mit LH₂ auf etwa 2 Minuten reduziert werden. Neben der problemlosen Bedienbarkeit der Betankungskupplungen wird insbesondere die Dauer des Betankungsvorganges ein wesentliches Kriterium für die Akzeptanz von Wasserstoff und LNG als Energieträger in Kraftfahrzeugen darstellen.

Nachteilig bei der in der DE-PS 41 04 711 beschriebenen Kupplung für vakuumisolierte Rohr- oder Schlauchleitungen ist jedoch deren vergleichsweise große Baulänge - der Kupplungsstecker stellt die axiale Verlängerung des Zuleitungsschlauches dar - und das daraus resultierende große Drehmoment auf die fahrzeugseitige Kupplungshälfte bzw. deren Befestigung am Kraftfahrzeug bei horizontaler Anordnung. Hierzu ist anzumerken, daß aufgrund der einfacheren Bedienbarkeit, die mit der dem Autofahrer bereits bekannten horizontalen Anordnung verbunden ist, diese wohl auch bei Wasserstoff- und LNG-betriebenen Pkws beibehalten werden wird.

Aufgabe der vorliegenden Erfindung ist es, eine gattungsgemäße Kupplung für vakuumisolierte Rohr- oder Schlauchleitungen anzugeben, die zum einen eine geringere Baulänge aufweist und zum anderen ein kleineres Drehmoment auf die fahrzeugseitige Kupplungshälfte bewirkt.

Dies wird erfindungsgemäß dadurch erreicht, daß die tankstellenseitigen Zuführleitung(en) seitlich an dem Kupplungsstecker angeschlossen ist/sind oder an diesen anschließbar ist/sind und das oder die Leitungsrohre des Kupplungssteckers jeweils wenigstens eine Öffnung aufweisen, die mit einer oder den entsprechenden Öffnungen der Zuführleitungen zur Deckung bringbar sind.

Im Gegensatz zu den bekannten Kupplungskonstruktionen stellt die Zuführleitung bzw. stellen die Zuführleitungen, über die die kryogenen Medien aus dem oder einem der Vorratsbehälter der eigentlichen Tankstelle der Kupplung zugeführt werden, nun nicht mehr die axiale Verlängerung des Kupplungssteckers dar. Dies hat zur Folge, daß eine wesentlich kürzere Baulänge der Kupplung, genauer gesagt des Kupplungssteckers, realisiert werden kann. Dadurch kann auch das Gewicht des Kupplungssteckers verringert und so die Bedienbarkeit der Kupplung verbessert werden. Des weiteren wird das Drehmoment auf die Befestigung der fahrzeugseitigen Kupplungshälfte. verringert, was zur Folge hat, daß die Befestigung der fahrzeugseitigen Kupplungshälfte nur auf diese verringerte Belastung ausgelegt werden muß.

Gemäß einer vorteilhaften Ausgestaltung der erfindungsgemäßen Kupplung sind sowohl der Kupplungsstecker als auch die Kupplungsdose unmittelbar benachbart der Trennebene jeweils mit einem Absperrorgan versehen. Dabei sind das oder die Leitungsrohre bis hinter das steckerseitige Absperrorgan zurückziehbar. Hierbei sind die Absperrorgane vorzugsweise als sog. Kugelhähne ausgebildet.

Es hat sich gezeigt, daß insbesondere durch die Verwendung derartiger Kugelhähne auch bei den niedrigen Temperaturen, die insbesondere beim Einsatz von LH₂ auftreten, eine ausreichende Dichtigkeit zur Umgebung gewährleistet werden kann. Altemativ zu den genannten Kugelhähnen sind als Absperrorgange auch Schieber oder Schlitzventile denkbar.

Die erfindungsgemäße Kupplung für vakuumisolierte Rohr- oder Schlauchleitungen weiterbildend wird vorgeschlagen, daß die Verbindung zwischen der oder den Zuführleitungen und dem Kupplungsstecker mittels einer bzw. mehrerer kryogener Schraubverbindungen erfolgt. Im Regelfall werden die Zuführleitungen fest mit dem Kupplungsstecker verbunden sein, es sind jedoch Anwendungen denkbar, bei denen eine lösbare Verbindung, beispielsweise in Form einer Schraubverbindung, von Vorteil ist.

Eine weitere Ausgestaltung der erfindungsgemäßen Kupplung zeichnet sich dadurch aus, daß Mittel zum Spülen und/oder zur Dichtheitsprüfung des Raumes in der Trennebene zwischen dem Kupplungsstecker und/oder der Kupplungsdose vorgesehen werden.

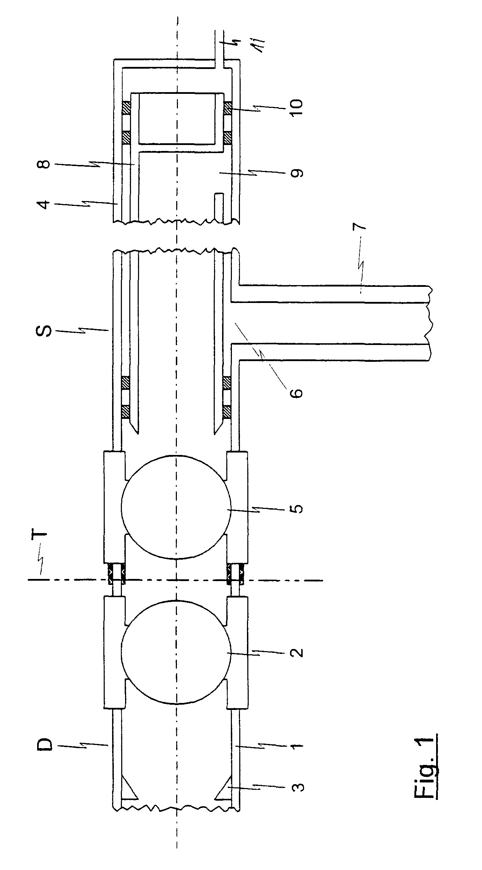

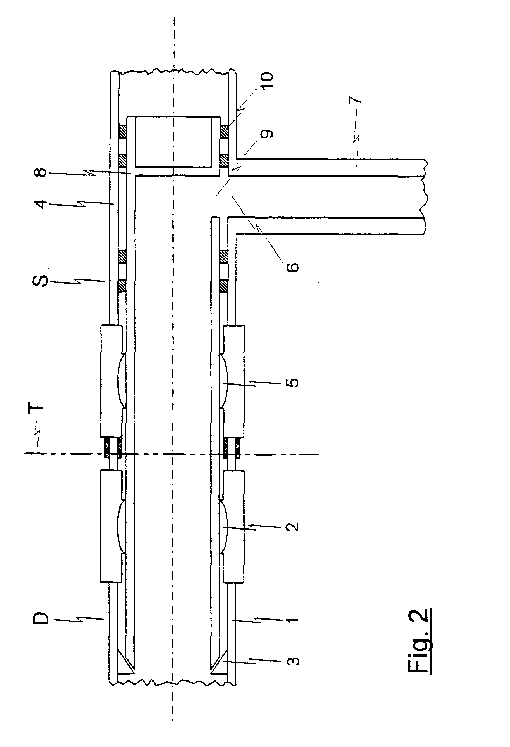

Die erfindungsgemäße Kupplung für vakuumisolierte Rohr- oder Schlauchleitungen sowie weitere Ausgestaltungen derselben seien anhand des in den Figuren 1 und 2 dargestellten Ausführungsbeispieles näher erläutert.

Hierbei zeigen:
- Fig. 1:: Eine Ausführungsform der erfindungsgemäßen Kupplung im zusammengekuppelten Zustand, wobei das Leitungsrohr des Kupplungssteckers hinter das steckerseitige Absperrorgan zurückgezogen ist.
- Fig. 2:: Dieselbe Ausführungsform wie in der Figur 1 dargestellt, wobei nunmehr jedoch das Leitungsrohr des Kupplungssteckers bis zum Anschlag in die Kupplungsdose eingeführt ist.

Die Figuren 1 und 2 zeigen in einer schematischen Darstellung die erfindungsgemäße Kupplung für vakuumisolierte Rohr- oder Schlauchleitungen in einer sog. einadrigen Ausführungsform. Häufig kommen auch zweiadrige Ausführungsformen zum Einsatz. Prinzipiell sind auch drei- oder mehradrige Ausführungsformen denkbar.

Die in den Figuren 1 und 2 dargestellte einadrige Ausführungsform der erfindungsgemäßen Kupplung für vakuumisolierte Rohr- oder Schlauchleitungen besteht aus dem Kupplungsstecker S sowie einer Kupplungsdose D. An der Trennebene T sind Kupplungsdose D und Kupplungsstecker S miteinander verbunden. Die Kupplungsdose D weist eine Außenwandung 1 auf, in die das Leitungsrohr 8 des Kupplungssteckers S bis zu einem Anschlag 3 eingeschoben werden kann. Ferner weist die Kupplungsdose D einen Kugelhahn 2 auf, wobei dessen Durchgangsbohrung zur Aufnahme des Leitungsrohres 8 des Kupplungssteckers S vorgesehen ist.

Der Kupplungsstecker S weist ebenfalls eine Außenwandung 4 auf, in der das axial verschiebbare Leitungsrohr 8 angeordnet ist.

Über eine Leitung 11 kann dem Kupplungsstecker S und der Kupplungsdose D ein Spülmedium, beispielsweise Stickstoff, zugeführt werden.

Die Zuführleitung 7, über die das kryogene Medium dem Kupplungsstecker S zugeführt wird, ist erfindungsgemäß seitlich an dem Kupplungsstecker S angeschtossen.

Im Falle einer zwei- oder mehradrige Ausführungsform der erfindungsgemäßen Kupplung können eine oder mehrere Zuführleitungen vorgesehen werden. Wird lediglich eine Zuführleitung vorgesehen, so ist diese zwei- oder mehradrig auszulegen. Werden hingegen mehrere Zuführleitungen vorgesehen, so können diese ein- und/oder mehradrig ausgebildet sein.

Bei einer mehradrigen Ausgestaltung der erfindungsgemäßen Kupplung ist der Kupplungsstecker entsprechend ein- oder mehradrig auszubilden. Dies bedeutet, daß zwei oder mehr, vorzugsweise konzentrisch angeordnete Leitungsrohre in dem Kupplungsstecker vorzusehen sind. Dies gilt unabhängig davon, ob nur eine mehradrige Zuführleitung oder mehrere separate Zuführleitungen vorgesehen werden.

Zum Überfüllen des kryogenen Mediums in den fahrzeugseitigen Speicherbehälter wird das Leitungsrohr 8 durch die geöffneten Kugelhähne 2 und 5 bzw. deren Durchgangsbohrungen bis zum dem Anschlag 3 der Kupplungsdose D geführt. In dieser Position kommen die Öffnungen 6 und 9 der Zuführteitung 7 und des Leitungsrohres 8 zur Deckung, so daß dem kryogenen Medium, das vorzugsweise in flüssiger Form überfüllt wird, ein geringer Strömungswiderstand geboten wird.

Zwischen der Außenwandung 4 des Kupplungssteckers S und dem Leitungsrohr 8 sind entsprechende Dichtungen 10 vorgesehen.

Das Verschieben des Leitungsrohrs 8 kann mittels pneumatisch oder mechanisch wirkender Vorrichtungen erfolgen. Im Regelfall wird das Einschieben des Leitungsrohres 8 in die Kupplungsdose D mit dem Verklammern von Kupplungsstecker S und Kupplungsdose D sowie dem Öffnen der Kugelhähne 2 und 5 gekoppelt sein, wodurch die Bedienbarkeit der erfindungsgemäßen Kupplung vereinfacht wird.

Die erfindungsgemäße Kupplung für vakuumisolierte Rohr- oder Schlauchleitungen eignen sich insbesondere als Betankungskupplung für Kraftfahrzeuge, die mit flüssigem Wasserstoff und/oder LNG betrieben werden und bei denen der fahrzeugseitige Speicherbehälter mit flüssigem Wasserstoff oder LNG betankt wird.

## Patentansprüche

1. Kupplung für vakuumisolierte Rohr- oder Schlauchleitungen, die zur Führung eines oder mehrerer kryogener Medien vorgesehen sind, bestehend aus einem ein- oder mehradrigen Kupplungsstecker, dem bzw. von dem mittels einer ein- oder mehradrigen Zuführleitung oder dem bzw. von dem mittels mehrerer Zuführleitungen das oder die kryogenen Medien zugeführt bzw. abgezogen werden, und einer Kupplungsdose, wobei im zusammengekuppelten Zustand ein Leitungsrohr des Kupplungssteckers, das in axialer Richtung beweglich zum Kupplungsstecker ausgebildet ist, sich über die Trennebene hinaus in die Kupplungsdose hinein erstreckt, **dadurch gekennzeichnet, daß** die tankstellenseitige(n) Zuführleitung(en) (7) seitlich an dem Kupplungsstecker (S) angeschlossen ist/sind oder an diesen anschließbar ist/sind und das oder die Leitungsrohre (8) des Kupplungssteckers (S) jeweils wenigstens eine Öffnung (9) aufweisen, die mit einer oder den entsprechenden Öffnungen (6) der Zuführleitungen (7) zur Deckung bringbar sind.

2. Kupplung für vakuumisolierte Rohr- oder Schlauchleitungen nach Anspruch 1, **dadurch gekennzeichnet, daß** der Kupplungsstecker (S) und die Kupplungsdose (D) unmittelbar benachbart der Trennebene (T) jeweils mit einem Absperrorgan versehen sind und das oder die Leitungsrohre (8) bis hinter das steckerseitige Absperrorgan zurückziehbar sind.

3. Kupplung für vakuumisolierte Rohr- oder Schlauchleitungen nach Anspruch 1 oder 2, **dadurch gekennzeichnet, daß** die Absperrorgane als Kugelhähne (2, 5) ausgebildet sind.

4. Kupplung für vakuumisolierte Rohr- oder Schlauchleitungen nach einem der vorhergehenden Ansprüche, **dadurch gekennzeichnet, daß** die Verbindung zwischen der oder den Zuführleitungen (7) und dem Kupplungsstecker (S) mittels einer kryogenen Schraubverbindung erfolgt.

5. Kupplung für vakuumisolierte Rohr- oder Schlauchleitungen nach einem der vorhergehenden Ansprüche, **dadurch gekennzeichnet, daß** sie Mittel zum Spülen und/oder zur Dichtheitsprüfung des Raumes in der Trennebene (T) zwischen dem Kupplungsstecker (S) und/oder der Kupplungsdose (D) aufweist.

6. Verwendung einer Kupplung für vakuumisolierte Rohr- oder Schlauchleitungen nach einem der vorhergehenden Ansprüche als Betankungskupplung für Kraftfahrzeuge, die mit flüssigem Wasserstoff und/oder verflüssigtem Erdgas betrieben werden.

## Claims

1. Coupling for vacuum-insulated pipe or hose lines which are intended for carrying one or more cryogenic media, consisting of a single- or multi-core coupling plug, to which or from which the cryogenic medium or media is/are fed or drawn off by means of a single- or multi-core feed line or by means of a plurality of feed lines, and of a coupling socket, a conduit pipe of the coupling plug extending beyond the parting plane into the coupling socket in the coupled-together state, this conduit pipe being designed to be movable in the axial direction relative to the coupling plug, **characterized in that** the filling-station-side feed line(s) (7) is/are connected laterally to the coupling plug (S) or can be connected laterally to the latter, and the conduit pipe or pipes (8) of the coupling plug (S) in each case has/have at least one opening (9) which can be made to coincide with a corresponding opening or openings (6) of the feed lines (7).

2. Coupling for vacuum-insulated pipe or hose lines according to Claim 1, **characterized in that** the coupling plug (S) and the coupling socket (D), directly adjacent to the parting plane (T), are each provided with a shut-off member, and the conduit pipe or pipes (8) can be pulled back to behind the plug-side shut-off member.

3. Coupling for vacuum-insulated pipe or hose lines according to Claim 1 or 2, **characterized in that** the shut-off members are designed as ball valves (2, 5).

4. Coupling for vacuum-insulated pipe or hose lines according to one of the preceding claims, **characterized in that** the connection between the feed line or lines (7) and the coupling plug (S) is effected by means of a cryogenic screwed connection.

5. Coupling for vacuum-insulated pipe or hose lines according to one of the preceding claims, **characterized in that** it has means for flushing and/or for leakage testing the space in the parting plane (T) between the coupling plug (S) and/or the coupling socket (D).

6. Use of a coupling for vacuum-insulated pipe or hose lines according to one of the preceding claims as a refuelling coupling for motor vehicles which are operated with liquid hydrogen and/or liquefied natural gas.

## Revendications

1. Raccord pour tuyaux rigides ou flexibles isolés par le vide, qui sont prévus pour le guidage d'un ou de plusieurs fluides cryogéniques, se composant d'un connecteur de raccordement à un ou plusieurs canaux, auquel ou duquel, au moyen d'une conduite d'alimentation à un ou plusieurs canaux, ou auquel ou duquel, au moyen de plusieurs conduites d'alimentation, le ou les fluides cryogéniques sont acheminés ou extraits, et d'une boîte de raccordement, où, dans l'état assemblé, un tube de conduite du connecteur de raccordement, qui est réalisé dans la direction axiale de manière mobile par rapport au connecteur de raccordement, s'étend au-delà du plan de séparation dans la boîte de raccordement, **caractérisé en ce que** la ou les conduites d'alimentation (7) du côté de la station service est ou sont raccordées latéralement au connecteur de raccordement (S) ou peut ou peuvent lui être raccordée(s) et le ou les tubes de conduite (8) du connecteur de raccordement (S) présentent à chaque fois au moins une ouverture (9) qui peut être amenée en coïncidence avec une ou avec les ouvertures (6) correspondantes des conduites d'alimentation (7).

2. Raccord pour tuyaux rigides ou flexibles isolés par le vide selon la revendication 1, **caractérisé en ce que** le connecteur de raccordement (S) et la boîte de raccordement (D) sont pourvus à proximité immédiate du plan de séparation (T) à chaque fois d'un organe d'arrêt et le ou les tubes de conduite (8) peuvent être retirés jusque derrière l'organe d'arrêt du côté du connecteur.

3. Raccord pour tuyaux rigides ou flexibles isolés par le vide selon la revendication 1 ou la revendication 2, **caractérisé en ce que** les organes d'arrêt sont réalisés sous la forme de robinets à boisseaux sphériques (2, 5).

4. Raccord pour tuyaux rigides ou flexibles isolés par le vide selon l'une quelconque des revendications précédentes, **caractérisé en ce que** le raccordement entre la ou les conduites d'alimentation (7) et le connecteur de raccordement (S) s'effectue au moyen d'une connexion vissée cryogénique.

5. Raccord pour tuyaux rigides ou flexibles isolés par le vide selon l'une quelconque des revendications précédentes, **caractérisé en ce qu'**il présente des moyens pour rincer et/ou pour vérifier l'étanchéité de l'espace dans le plan de séparation (T) entre le connecteur de raccordement (S) et/ou la boîte de raccordement (D).

6. Utilisation d'un raccord pour tuyaux rigides ou flexibles isolés par le vide selon l'une quelconque des revendications précédentes en tant que raccord de remplissage de réservoir pour des véhicules automobiles qui fonctionnent avec de l'hydrogène liquide et/ou du gaz naturel liquéfié.
